# EUROPÄISCHE PATENTANMELDUNG

(11) **EP 1 909 375 A2**
(43) Veröffentlichungstag der Anmeldung: **09.04.2008**
(21) Anmeldenummer: 08001396.4
(22) Anmeldetag: 11.09.2003
(51) Int. Cl.: H02K 41/03, F15B 15/14

(54) **Linearantriebsvorrichtung**

(30) Priorität: 24.09.2002 DE 10244260
(62) Teilanmeldung aus: 03020655.1
(71) Anmelder: FESTO AG & Co, 73734 Esslingen (DE)
(72) Erfinder: Finkbeiner, Matthias, 71159 Mötzingen (DE); Feyrer, Thomas, 73734 Esslingen (DE); Neumann, Rüdiger, Dr., 73760 Ostfildern (DE); Hartmann, Armin, 73760 Ostfildern (DE)
(74) Vertreter: Abel, Martin

(57) **Zusammenfassung**

Es wird eine Linearantriebsvorrichtung (1) vorgeschlagen, die einen Stator (2) und einen relativ zu dem Stator (2) linear bewegbaren Läufer (4) aufweist. Sie enthält ferner ein elektrodynamisches Lineardirektantriebssystem (6) und ein Fluidkraftantriebssystem (7). Durch die beiden Antriebssysteme können unabhängig voneinander elektrodynamisch und durch Fluidkraft erzeugte Stellkräfte auf den Läufer (4) ausgeübt werden.

## Beschreibung

Die Erfindung betrifft eine Linearantriebsvorrichtung, mit einem Stator und einem relativ zu dem Stator linear bewegbaren Läufer, und mit einem elektrodynamischen Lineardirektantriebssystem, das zwei antriebsmäßig zusammenwirkende Antriebseinrichtungen in Gestalt einer mehrere koaxial aufeinanderfolgende Antriebsspulen enthaltenden Spuleneinrichtung und einer einen oder mehrere axial aufeinanderfolgende Permanentmagnete enthaltenden Magneteinrichtung aufweist, von denen die eine am Stator und die andere am Läufer angeordnet ist und durch die der Läufer mit einer ersten Stellkraft beaufschlagbar ist.

Eine Linearantriebsvorrichtung dieser Art geht beispielsweise aus der DE 201 13 014 U1 hervor. Sie besteht in diesem Fall allein aus einem Lineardirektantrieb, der einen von einem Gehäuse gebildeten Stator enthält, in dem der Läufer linear beweglich angeordnet ist. Der Läufer ist ringförmig ausgebildet und mit einer Spuleneinrichtung versehen, wobei er eine mit einem Magnetsystem ausgestattete Statorstange umschließt.

Wird die Spuleneinrichtung getaktet mit einer Erregerspannung beaufschlagt, bildet sich ein wanderndes Magnetfeld aus, das eine erste Stellkraft auf den Läufer ausübt, der sich mithin in einer Bewegungsrichtung relativ,zum Stator verlagert. Diese Bewegung kann vom Läufer abgegriffen werden, um ein Bauteil zu bewegen. Eine vergleichbare Linearantriebsvorrichtung geht aus der EP 1 150 416 A1 hervor. Bei ihr ist allerdings die Spuleneinrichtung am Stator und die Magneteinrichtung am Läufer angeordnet.

Einen elektrischen Linearantrieb mit ähnlichem Aufbau zeigt auch die DE 198 53 942 C1.

All diesen Linearantriebsvorrichtungen ist gemein, dass sie zwar eine exakte Positionierung des Läufers und somit der damit verbundenen Bauteile ermöglichen. Sie eignen sich besonders, wenn kleine Lasten sehr dynamisch und präzise bewegt werden müssen. Kurzzeitig können sehr hohe Stellkräfte erzielt werden. Problematisch ist allerdings, dass lediglich relativ geringe Dauerkräfte zur Verfügung stehen. Müssen Lasten über längere Zeit gehalten oder entlang einer längeren Wegstrecke bewegt werden, erwärmt sich das Antriebssystem und kann daher nur die Dauerkraft zu Verfügung stellen.

Es ist die Aufgabe der vorliegenden Erfindung, eine Linearantriebsvorrichtung zu schaffen, die sowohl einen sehr dynamischen und präzisen Betrieb gestattet als auch hohe Dauerkräfte aufbringen kann.

Zur Lösung dieser Aufgabe ist die Linearantriebsvorrichtung zusätzlich mit einem Fluidkraftantriebssystem ausgestattet, das eine Fluidbeaufschlagung des Läufers zur Erzeugung einer von der ersten Stellkraft unabhängigen zweiten Stellkraft ermöglicht.

Auf diese Weise liegt eine Linearantriebsvorrichtung vor, die die Vorteile eines elektrodynamischen Lineardirektantriebes und eines fluidkraftbetätigten Linearantriebes in sich vereinigt. Durch das Lineardirektantriebssystem sind weiterhin hohe Beschleunigungen und präzise Positionierungen möglich. Aufgrund des zusätzlich vorhandenen Fluidkraftantriebssystems können überdies durch entsprechende Fluidbeaufschlagung dauerhaft sehr hohe Stellkräfte erzielt werden, was es ermöglicht, auch schwere Lasten über längere Zeit zu halten oder über eine längere Wegstrecke zu bewegen. Dabei können die ersten und zweiten Stellkräfte je nach Ausstattung oder Ansteuerungsart alternativ oder gleichzeitig, sowie gleichgerichtet oder gegensinnig aufgebracht werden. Beispielsweise lässt sich durch das Fluidkraftantriebssystem die Funktionalität einer Luftfeder realisieren oder kann eine konstante Drucksteuerung verwirklicht werden, um eine Last in der Schwebe zu halten. Auch ein servorpneumatischer Betrieb ist möglich, bei dem der Fluiddruck und damit die handhabbare Last und deren Dynamik nach Bedarf geregelt werden können.

Zwar ist aus der DE 195 03 145 C2 bereits eine Linearantriebsvorrichtung bekannt, in der die Funktionen eines fluidkraftbetätigten Linearantriebes und eines elektrischen Spindelantriebes kombiniert sind. Diese Antriebskombination bereitet jedoch Probleme vor allem in der Abdichtung des Läufers gegenüber der Antriebsspindel. Außerdem rotiert die Antriebsspindel bei der durch Fluidkraft hervorgerufenen Linearbewegung des Läufers ständig mit, was die Dynamik beein-trächtigt und hohe Reibung verursacht, die einen frühzeitigen Verschleiß zur Folge haben kann. Im Gegensatz dazu zeichnet sich ein elektrodynamisches Lineardirektantriebssystem in der Regel durch glatte Oberflächen aus und durch einen Verzicht auf formschlüssige Kopplung zwischen Stator und Läufer, so dass der Betrieb des Fluidkraftantriebssystems durch das parallel vorhandene Lineardirektantriebssystem nicht beeinträchtigt wird.

Vorteilhafte Weiterbildungen der Erfindung gehen aus den Unteransprüchen hervor.

Bei einer bevorzugten Bauform findet sich im Stator ein Längserstreckung aufweisender Aufnahmeraum, in dem ein Abtriebsteil des Läufers linear verstellbar angeordnet ist, das sowohl mit einer der Antriebseinrichtungen des Lineardirektantriebes ausgestattet ist als auch wenigstens eine axial orientierte, zur gesteuerten Fluidbeaufschlagung vorgesehene Beaufschlagungsfläche aufweist. Somit sind in dem Abtriebsteil sowohl die elektrischen als auch die fluidischen Antriebsfunktionen zusammengefasst, was überaus kompakte Abmessungen der Gesamtvorrichtung zulässt.

Bei einer alternativen Bauform verfügt die Linearantriebsvorrichtung über zwei gesonderte Abtriebsteile, von denen das eine zum Lineardirektantriebssystem und das andere zum Fluidkraftantriebssystem gehört. Eine derartige funktionelle Trennung hat den Vorteil, dass die beiden Systemkomponenten ohne gegenseitige Rücksichtnahme optimiert werden können. Durch die Bewegungskopplung ist weiterhin der gewünschte Kraftabgriff unter den schon erwähnten Vorteilen möglich.

Nachfolgend wird die Erfindung anhand der beiliegenden Zeichnung näher erläutert. In dieser zeigen:
- Figur 1: eine mögliche erste Bauform der erfindungsgemäßen Linearantriebsvorrichtung im Längsschnitt,
- Figur 2: wiederum im Längsschnitt eine weitere mögliche Ausführungsform der Linearantriebsvorrichtung, und
- Figur 3: eine dritte Bauform der Linearantriebsvorrichtung, bei der im Vergleich zu den Bauformen der Figuren 1 und 2 die elektromagnetische Antriebskraft und die fluidische Antriebskraft an gesonderten Abtriebsteilen aufgebracht wird.

Die in ihrer Gesamtheit mit Bezugsziffer 1 versehenen Linearantriebsvorrichtungen enthalten jeweils einen Längserstrekkung aufweisenden Stator 2 und einen relativ zu dem Stator 2 in Richtung dessen Längsachse 3 linear verstellbaren Läufer 4. An dem Läufer 4 sind außerhalb des Stators 2 Befestigungsmittel 5 beliebiger Art vorgesehen, über die zu bewegende Bauteile am Läufer 4 befestigt werden können.

Die Linearantriebsvorrichtungen 1 sind jeweils mit einem elektrodynamischen Lineardirektantriebssystem 6 und zugleich auch mit einem Fluidkraftantriebssystem 7 ausgestattet. Durch das Lineardirektantriebssystem 6 kann der Läufer 4 mit einer ersten Stellkraft beaufschlagt werden, die auf elektromagnetischem bzw. elektrodynamischem Wirkprinzip beruht. Durch das Fluidkraftantriebssystem 7 ist eine Beaufschlagung des Läufers 4 mit einer zweiten Stellkraft möglich, die aus der Fluidbeaufschlagung des Läufers 4 herrührt. Somit kann der Läufer 4 mit zwei voneinander unabhängigen ersten und zweiten Stellkräften beaufschlagt werden, um seine durch einen Doppelpfeil angedeutete Linearbewegung 8 hervorzurufen und um den Läufer 4 bei Bedarf an einer bestimmten Stelle zu stoppen.

Die Wirkungsrichtung der Stellkräfte und die zeitliche Abfolge ihrer Erzeugung kann nach Bedarf gewählt werden. Auf diese Weise ist beispielsweise eine gleichgerichtete Beaufschlagung des Läufers 4 möglich, um durch Addition der Stellkräfte in der einen oder anderen Richtung besonders schwere Lasten zu transportieren oder hohe Stellgeschwindigkeiten zu erreichen. Auch einander entgegengesetzte Stellkräfte sind möglich, beispielsweise um den sich mit hoher Geschwindigkeit bewegenden Läufer abzubremsen oder um den Läufer 4 an einer bestimmten Stelle relativ zum Stator 2 zu fixieren.Daneben können die Stellkräfte auch so aufgebracht werden, dass zur gleichen Zeit nur eine der Stellkräfte wirksam ist.

Die Integration der beiden Antriebssysteme in ein und dieselbe Linearantriebsvorrichtung 1 ermöglicht sehr kompakte Abmessungen, wobei quasi ein Hybridantrieb vorliegt, der die Stärken der beiden Antriebssysteme auf ideale Weise in sich vereinigt. Die Abmessungen der Linearantriebsvorrichtung 1 sind nicht oder nur geringfügig größer als diejenigen eines ausschließlich elektrodynamischen oder fluidkraftbetätigten Linearantriebes.

Im folgenden sei im einzelnen auf die in der Zeichnung abgebildeten unterschiedlichen Ausführungsformen eingegangen.

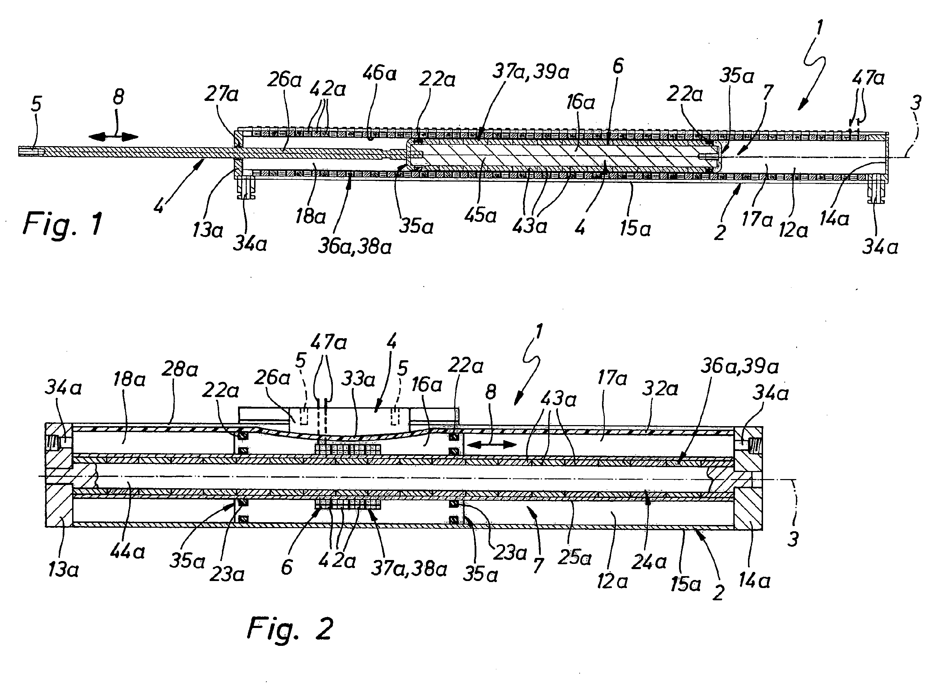

Bezugnehmend zunächst auf die Bauformen der Figuren 1 und 2 ist jeweils ein Stator 2 vorgesehen, der in seinem Inneren einen Längserstreckung aufweisenden Aufnahmeraum 12a definiert. Der Aufnahmeraum 12a ist stirnseitig von einer ersten bzw. zweiten Abschlusswand 13a, 14a und peripher von einer Umfangswand 15a begrenzt.

Im Inneren des Aufnahmeraumes 12a befindet sich ein zum Läufer 4 gehörendes Abtriebsteil 16a, das bevorzugt kolbenartig ausgebildet ist und den Aufnahmeraum 12a unter Abdichtung in zwei axial aufeinanderfolgende erste und zweite Teilräume 17a, 18a unterteilt.

Um die fluiddichte Trennung der beiden Teilräume 17a, 18a zu erzielen, ist das Abtriebsteil 16a am Außenumfang mit ringförmigen ersten Dichtungsmitteln 22a ausgestattet, die unter Abdichtung an der Innenfläche der Umfangswand 15a anliegen.

Das Abtriebsteil 16a gemäß Figur 1 füllt den gesamten Querschnitt des Aufnahmeraumes 12a aus. Weitere Dichtungsmittel zur fluiddichten Abtrennung der beiden Teilräume 17a, 18a sind daher nicht erforderlich.

Beim Ausführungsbeispiel der Figur 2 hingegen hat das Abtriebsteil 16a einen ringförmigen Querschnitt. Es ist von einem als Statorstange 24a bezeichneten stangenartigen Gebilde, insbesondere koaxial, durchsetzt, das sich im Inneren des Aufnahmeraumes 12a in Richtung der Längsachse 3 zwischen den beiden Abschlusswänden 13a, 14a erstreckt. Die Statorstange 24a ist an den beiden Abschlusswänden 13a, 14a jeweils ortsfest fixiert.

Um einen Fluiddurchtritt zwischen dem Abtriebsteil 16a und der Statorstange 24a zu vermeiden, ist das Abtriebsteil 16a zusätzlich mit zweiten Dichtungsmitteln 23a ausgestattet, die die Statorstange 24a koaxial umschließen und mit deren Außenumfangsfläche in Dichtkontakt stehen. Die Außenumfangsfläche der Statorstange 24a ist dabei zweckmäßigerweise von einer außen glattflächigen Gleithülse 25a gebildet.

Mit dem Abtriebsteil 16a ist jeweils mindestens ein Kraftabgriffsglied 26a des Läufers 4 bewegungsgekoppelt. Dieses ermöglicht außerhalb des Aufnahmeraumes 12a einen Kraftabgriff. Der Kraftabgriff erfolgt an den Befestigungsmitteln 5, die außerhalb des Stators 2 an dem Kraftabgriffsglied 26a vorgesehen sind.

Beim Ausführungsbeispiel der Figur 1 ist das Kraftabgriffsglied 26a stangenartig ausgebildet. Es ragt an einer Stirnseite vom Abtriebsteil 16a weg, wobei es den zugeordneten Teilraum 18a und die diesen begrenzende Abschlusswand 13a unter Abdichtung verschiebbar nach außen hin durchsetzt. Dritte Dichtungsmittel, die an der betreffenden Abschlusswand 13a angeordnet sind, und das Kraftabgriffsglied 26a umschließen, sind bei 27a angedeutet.

Bei dem Ausführungsbeispiel der Figur 2 erstreckt sich das Kraftabgriffsglied 26a ausgehend vom Abtriebsteil 16a nicht in axialer Richtung, sondern seitwärts, quer zur Längsachse 3 des Stators 2. Es durchgreift dabei einen Längsschlitz 28a der Umfangswand 15a, der sich zweckmäßigerweise über die gesamte Länge der Umfangswand 15a erstreckt und die Umfangswand 15a lokal radial durchtrennt. Der Durchgriff durch den Längsschlitz 28a erfolgt zweckmäßigerweise mittels eines stegartigen Abschnittes des Kraftabgriffsgliedes 26a.

Das Kraftabgriffsglied 26a kann im Bereich der Außenfläche des Stators 2 an einer nicht näher dargestellten Linearführungseinrichtung verschiebbar geführt sein. Der außerhalb des Stators 2 liegende Abschnitt des Kraftabgriffsgliedes 26a kann insbesondere tisch- oder schlittenartig ausgebildet sein.

Wird das Abtriebsteil 16a in der einen oder anderen Richtung linear verlagert, wird diese Bewegung vom Kraftabgriffsglied 26a und von den daran angeordneten Befestigungsmitteln 5 synchron mitgemacht.

Die beiden Teilräume 17a, 18a sind im Bereich des Längsschlitzes 28a durch mindestens ein sich entlang des Längsschlitzes 28a erstreckendes flexibles Dichtband 32a abgedichtet, das mit den Schlitzflanken in Dichtkontakt steht. Auf Höhe des Abtriebsteiles 16a wird das Dichtband 32a durch entsprechende Führungsmittel des Läufers 4 nach radial innen vom Längsschlitz 28a abgehoben, so dass der Durchgriff des Kraftabgriffsgliedes 26a erfolgen kann. An dem Abtriebsteil 16a sind zueinander beabstandete erste Dichtungsmittel 22a vorgesehen, wobei der abgehobene Abschnitt 33a des Dichtbandes 32a zwischen diesen beiden ersten Dichtungsmitteln 22a liegt.

Somit ist gewährleistet, dass auch im Falle der Bauform gemäß Figur 2 beide Teilräume 17a, 18a stets zur Umgebung hin abgedichtet sind, unabhängig von der momentanen Axialposition des Läufers 4.

Die beiden Teilräume 17a, 18a sind jeweils zur gesteuerten Fluidbeaufschlagung ausgebildet. In jeden Teilraum 17a, 18a mündet ein Fluidkanal 34a, über den ein fluidisches Druckmedium, beispielsweise Druckluft oder ein hydraulisches Medium, zu- und abgeführt werden kann. Die Zu- und Abfuhr wird durch eine nicht näher dargestellte Ventileinrichtung gesteuert, die ihrerseits durch eine ebenfalls nicht näher dargestellte elektronische Steuereinrichtung angesteuert wird.

Die beiden einem jeweiligen Teilraum 17a, 18a zugewandten Stirnflächen des Abtriebsteiles 16a bilden jeweils eine Beaufschlagungsfläche 35a. Das in einen Teilraum 17a, 18a eingespeiste Fluid wirkt auf die zugeordnete Beaufschlagungsfläche 35a und ruft somit die auf den Läufer 4 wirkende, oben erwähnte zweite Stellkraft hervor, bei der es sich um eine Fluidkraft handelt.

Abweichend vom gezeigten Ausführungsbeispiel könnte auch nur einer der Teilräume 17a, 18a zur gesteuerten Fluidbeaufschlagung vorgesehen sein. Der andere Teilraum wäre in diesem Falle insbesondere ständig mit der Atmosphäre verbunden.

Die beiden Teilräume 17a, 18a, die beiden Fluidbeaufschlagungsflächen 35a und die beiden Fluidkanäle 34a gehören somit zu dem erwähnten Fluidkraftantriebssystem 7, mit dem auf den Läufer 4 eine fluidisch erzeugte zweite Stellkraft ausgeübt werden kann.

Zu dem Lineardirektantriebssystem 6 gehören zwei antriebsmäßig zusammenwirkende Antriebseinrichtungen, von denen die eine, erste Antriebseinrichtung 36a am Stator 2 und die andere, zweite Antriebseinrichtung 37a am Läufer 4 angeordnet ist. Eine dieser Antriebseinrichtungen - beim Ausführungsbeispiel der Figur 1 die erste Antriebseinrichtung 36a und beim Ausführungsbeispiel der Figur 2 die zweite Antriebseinrichtung 37a - ist von einen Spuleneinrichtung 38a gebildet, die mehrere koaxial aufeinanderfolgende Antriebsspulen 42a enthält. Die jeweils andere Antriebseinrichtung ist von einer Magneteinrichtung 39a gebildet, die über einen und vorzugsweise über mehrere axial aufeinanderfolgende Permanentmagnete 43a verfügt. Die Permanentmagnete 43a sind bevorzugt ringförmig ausgebildet. Zweckmäßigerweise liegt eine radiale Polarisierung der Permanentmagnete 43a vor, wobei unmittelbar benachbarte Permanentmagnete 43a einander entgegengesetzt gepolt sind.

Beim Ausführungsbeispiel der Figur 2 ist die Magneteinrichtung 39a ein Bestandteil der Statorstange 24a. Letztere enthält zweckmäßigerweise eine aus Vollmaterial bestehende oder zumindest teilweise hohl ausgebildete Trägerstange 44a, auf der die beim Ausführungsbeispiel als Ringmagnete ausgebildeten Permanentmagnete 43a koaxial aufeinanderfolgend sitzen. Um als Rückschlusseinrichtung zu wirken, muss die Trägerstange 44a aus magnetisch leitfähigem Material bestehen. Überdies dient die Trägerstange 44a zweckmäßigerweise zur endseitigen Fixierung der Statorstange 24a. Die Gleithülse 25a umschließt die Magneteinrichtung 39a koaxial.

Beim Ausführungsbeispiel der Figur 1 sitzen die zweckmäßigerweise ebenfalls ringförmig ausgebildeten Permanentmagnete 43a auf einem Kernkörper 45a des Abtriebsteiles 16a. Bei Bedarf können auch sie von einer Gleithülse umschlossen sein.

Die Spuleneinrichtung 38a ist bei beiden Ausführungsbeispielen koaxial zur Magneteinrichtung 39a ausgebildet. Beim Ausführungsbeispiel der Figur 2 sitzt sie am Abtriebsteil 16a, wobei ihre Länge ohne weiteres die gesamte Baulänge des Abtriebsteiles 16a einnehmen kann.

Beim Ausführungsbeispiel der Figur 1 ist die Spuleneinrichtung 38a zweckmäßigerweise radial innerhalb der Umfangswand 15a platziert. Sie kann auf einer Gleithülse 46a sitzen, um einen reibungsarmen Verschiebekontakt zum Abtriebsteil 16a zu gewährleisten.

Das Spulensystem 38a ist getaktet mit einer Erregerspannung beaufschlagbar. Eine derartige Ansteuerung ermöglichende elektrische Leiter sind bei 47a angedeutet.

Die beiden Antriebseinrichtungen 36a, 37a arbeiten nach dem elektrodynamischen Prinzip zusammen. Die Antriebsspulen 42a werden einzeln oder in Gruppen zeitlich aufeinanderfolgend erregt, wobei das erzeugte Magnetfeld mit den von der permanentmagnetischen Magneteinrichtung 39a hervorgerufenen Magnetfeldern zusammenwirkt, so dass sich Rückwirkungskräfte einstellen, die den Läufer 4 - je nach Polungsrichtung - in die eine oder andere Richtung beaufschlagen. Die Rückwirkungskräfte bilden dabei die oben erwähnte erste Stellkraft.

Durch aufeinander abgestimmte Betätigung der beiden Antriebssysteme 6, 7 können die am Läufer 4 angreifenden ersten und zweiten Stellkräfte nach Bedarf variiert und kombiniert werden, was es ermöglicht, den Läufer 4 beispielsweise über längere Zeit mit hoher Geschwindigkeit zum Transport einer hohen Last einzusetzen, oder aber den Läufer 4 stark zu beschleunigen oder präzise in gewünschten Stellungen zu positionieren.

Die erwähnte elektronische Steuereinrichtung steuert dabei sowohl die Erzeugung der fluidischen als auch der elektrodynamischen Stellkraft, wobei auch eine geregelte Betriebsweise möglich ist.

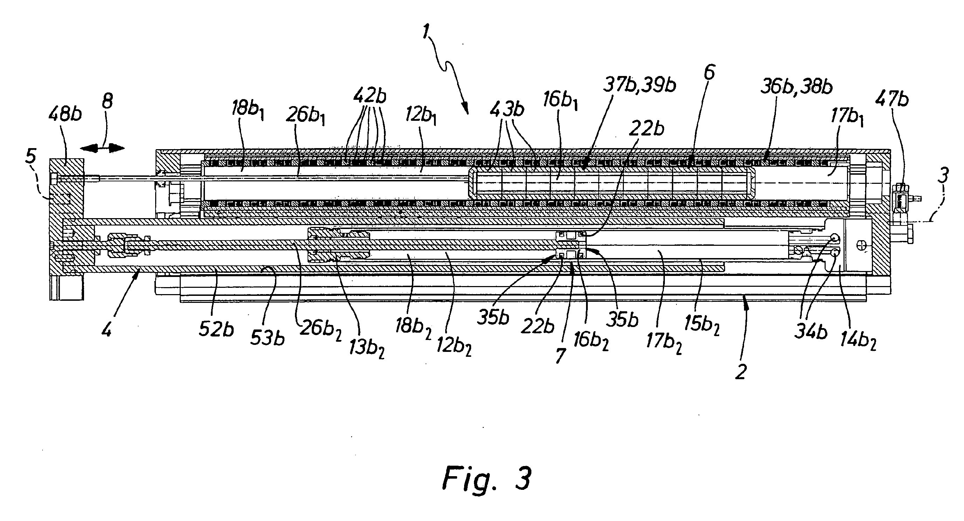

Während bei den Ausführungsbeispielen der Figuren 1 und 2 die fluidische Stellkraft und die elektrodynamische Stellkraft auf ein und dieselbe Komponente des Läufers 4 einwirkt und somit eine hoch integrierte Bauform vorliegt, zeigt die Figur 3 ein Ausführungsbeispiel, bei der die erwähnten Stellkräfte auf getrennte Komponenten des Läufers 4 einwirken.

In der Figur 3 sind diejenigen Komponenten, die den anlässlich der spezifischen Beschreibung der Figuren 1 und 2 erwähnten Komponenten entsprechen, anstelle mit dem Zusatz "a" mit dem Zusatz "b" versehen. Die vorausgegangene Beschreibung gilt insoweit auch für die Bauform der Figur 3. Im folgenden wird nurmehr auf die Besonderheiten der Bauform der Figur 3 eingegangen, mit denen sich diese von den bisher beschriebenen Bauformen unterscheidet.

Die Linearantriebsvorrichtung 1 der Figur 3 verfügt über zwei gesonderte Abtriebsteile 16b₁ und 16b₂. Diese beiden Abtriebsteile sind jeweils in einem gesonderten Aufnahmeraum 12b₁, 12b₂ untergebracht. Diese beiden Aufnahmeräume erstrekken sich parallel zueinander und sind Bestandteil des Stators 2.

Das erste Abtriebsteil 16b₁ gehört zum Lineardirektantriebssystem 6. Von ihm ragt ein erstes Kraftabgriffsglied 26b₁ weg, das stirnseitig aus dem Stator 2 herausragt.

Das zweite Abtriebsteil 16b₂ gehört zum Fluidkraftantriebssystem 7. Es unterteilt den ihn aufnehmenden Aufnahmeraum 12b₂ in einen ersten Teilraum 17b₂ und einen zweiten Teilraum 18b₂. Ausgehend von dem zweiten Abtriebsteil 16b₂ ragt ein zweites Kraftabgriffsglied 26b₂ axial zur gleichen Seite wie das erste Kraftabgriffsglied 26b₁ und ragt wie dieses stirnseitig aus dem Stator 2 heraus. Außerhalb des Stators 2 sind die beiden Kraftabgriffsglieder 26b₁, 26b₂ mittels einer Jocheinrichtung 48b fest miteinander verbunden, so dass sie axial bewegungsgekoppelt sind. An der Jocheinrichtung 48b sind die Befestigungsmittel 5 vorgesehen.

Durch Aktivierung des Lineardirektantriebssystems 6 kann eine elektrodynamisch erzeugte erste Stellkraft auf das erste Abtriebsteil 16b₁ ausgeübt werden. Durch Aktivierung des Fluidkraftantriebssystems 7 kann eine fluidisch erzeugte zweite Stellkraft auf das kolbenartig ausgebildete zweite Abtriebsteil 16b₂ ausgeübt werden. Da beide Abtriebsteile bewegungsgekoppelt sind und zum Läufer 4 gehören, kann dieser mithin wiederum sehr variabel durch die beiden Stellkräfte beaufschlagt werden.

Bei der Linearantriebsvorrichtung 1 der Figur 3 ist zusätzlich noch ein insbesondere rohrförmig ausgebildetes Führungsteil 52b vorgesehen, das ebenfalls mit dem Läufer 4 bewegungsgekoppelt ist und das in verschiebbar geführter Weise in eine Führungsausnehmung 53b des Stators 2 eintaucht.

Abgesehen von den Komponenten des Lineardirektantriebsystems 6 kann die Linearantriebsvorrichtung der Figur 3 im Aufbau demjenigen entsprechen, der in der WO 98/25032 A1 beschrieben ist. Die dortigen Ausführungen werden hiermit zum Inhalt der vorliegenden Beschreibung gemacht.

## Patentansprüche

1. Linearantriebsvorrichtung, mit einem Stator (2) und einem relativ zu dem Stator (2) linear bewegbaren Läufer (4), mit einem elektrodynamischen Lineardirektantriebssystem (6), das zwei antriebsmäßig zusammenwirkende Antriebseinrichtungen (36a, 37a; 36b, 37b) in Gestalt einer mehrere koaxial aufeinanderfolgende Antriebsspulen (42a, 42b) enthaltenden Spuleneinrichtung (38a, 38b) und einer einen oder mehrere axial aufeinanderfolgende Permanentmagnete (43a, 43b) enthaltenden Magneteinrichtung (39a, 39b) aufweist, von denen die eine am Stator (2) und die andere am Läufer (4) angeordnet ist und durch die der Läufer (4) mit einer ersten Stellkraft beaufschlagbar ist, und mit einem zusätzlich vorhandenen Fluidkraftantriebssystem (7), das eine Fluidbeaufschlagung des Läufers (4) zur Erzeugung einer zweiten Stellkraft ermöglicht, **dadurch gekennzeichnet, dass** das Fluidkraftantriebssystem (7) eine Fluidbeaufschlagung des Läufers (4) zur Erzeugung einer von der ersten Stellkraft unabhängigen zweiten Stellkraft ermöglicht und ferner einen servopneumatischen Betrieb ermöglicht, bei dem der Fluiddruck und damit die handhabbare Last und deren Dynamik nach Bedarf geregelt werden können.

2. Linearantriebsvorrichtung nach Anspruch 1, **gekennzeichnet durch** einen im Stator (2) vorgesehenen, Längserstreckung aufweisenden Aufnahmeraum (12a), in dem ein Abtriebsteil (16a) des Läufers (4) linear verstellbar angeordnet ist, das sowohl mit einer der Antriebseinrichtungen (36a, 37a) des Linearantriebssystems (6) ausgestattet ist als auch wenigstens eine axial orientierte, zur gesteuerten Fluidbeaufschlagung vorgesehene Beaufschlagungsfläche (35a) aufweist.

3. Linearantriebsvorrichtung nach Anspruch 2, **dadurch gekennzeichnet, dass** das Abtriebsteil (16a) des Läufers (4) den Aufnahmeraum (12a) des Stators (2) unter Abdichtung in zwei axial aufeinanderfolgende Teilräume (17a, 17b) unterteilt, von denen wenigstens einer zur gesteuerten Fluidbeaufschlagung ausgebildet ist.

4. Linearantriebsvorrichtung nach Anspruch 3, **dadurch gekennzeichnet, dass** beide Teilräume (17a, 18a) des Aufnahmeraumes (12a) zur gesteuerten Fluidbeaufschlagung ausgebildet sind.

5. Linearantriebsvorrichtung nach einem der Ansprüche 2 bis 4, **dadurch gekennzeichnet, dass** das Abtriebsteil (16a) kolbenartig ausgebildet ist.

6. Linearantriebsvorrichtung nach einem der Ansprüche 2 bis 5, **gekennzeichnet durch** mindestens ein mit dem Abtriebsteil (16a) bewegungsgekoppeltes Kraftabgriffsglied (26a), das außerhalb des Aufnahmeraumes (12a) einen Kraftabgriff ermöglicht.

7. Linearantriebsvorrichtung nach Anspruch 6, **dadurch gekennzeichnet, dass** wenigstens ein Kraftabgriffsglied (26a) stangenartig ausgebildet ist und axial vom Abtriebsteil (16a) wegragt, wobei es die zugeordnete statorseitige Abschlusswand (13a) des Aufnahmeraumes (12a) nach außen hin durchsetzt.

8. Linearantriebsvorrichtung nach einem der Ansprüche 1 bis 7, **dadurch gekennzeichnet, dass** die Umfangswand (15a) des Aufnahmeraumes (12a) von einem sich in der Längsrichtung des Aufnahmeraumes (12a) erstreckenden Längsschlitz (28a) radial durchsetzt ist, der von dem Kraftabgriffsglied (26a) durchgriffen wird und der axial beidseits des Kraftabgriffsgliedes (26a) durch wenigstens ein Dichtband (32a) fluiddicht verschlossen ist.

9. Linearantriebsvorrichtung nach Anspruch 8, **dadurch gekennzeichnet, dass** die statorseitige Antriebseinrichtung (36a) des Lineardirektantriebssystems (6) Bestandteil einer sich zwischen den Endbereichen des Aufnahmeraumes (12a) erstreckenden und das Abtriebsteil (16a) durchsetzenden Statorstange (24a) ist, wobei die Statorstange (24a) von dem Abtriebsteil (16a) unter Abdichtung und verschiebbar umschlossen ist.

10. Linearantriebsvorrichtung nach Anspruch 1, **dadurch gekennzeichnet, dass** der Läufer (4) über zwei gesonderte, jedoch axial bewegungsgekoppelte Abtriebsteile (16b₁, 16b₂) verfügt, von denen das eine mit einer der Antriebseinrichtungen (36b, 37b) des Lineardirektantriebssystems (6) ausgestattet ist und von denen das andere wenigstens eine axial orientierte, zur gesteuerten Fluidbeaufschlagung vorgesehene Beaufschlagungsfläche (35b) aufweist.

11. Linearantriebsvorrichtung nach Anspruch 10, **dadurch gekennzeichnet, dass** die beiden Abtriebsteile (16b₁, 16b₂) in zwei getrennten, jeweils Längserstreckung aufweisenden Aufnahmeräumen (12b₁, 12b₂) angeordnet sind.

12. Linearantriebsvorrichtung nach Anspruch 11, **dadurch gekennzeichnet, dass** das die mindestens eine Beaufschlagungsfläche (35b) aufweisende Abtriebsteil (16b₂) kolbenartig ausgebildet ist und den zugeordneten Aufnahmeraum (12b₂) unter Abdichtung in zwei axial aufeinanderfolgende Teilräume (17b₂, 18b₂) unterteilt, von denen wenigstens einer zur gesteuerten Fluidbeaufschlagung ausgebildet ist.

13. Linearantriebsvorrichtung nach einem der Ansprüche 10 bis 12, **dadurch gekennzeichnet, dass** von den beiden Abtriebsteilen (16b₁, 16b₂), zur gleichen Seite hin, jeweils mindestens ein Kraftabgriffsglied (26b₁, 26b₂) wegragt, wobei die Kraftabgriffsglieder (26b₁, 26b₂) außerhalb des Stators (2) unter Bildung einer Kraftabgriffseinheit durch eine Jocheinrichtung (48b) miteinander bewegungsgekoppelt sind.

14. Linearantriebsvorrichtung nach Anspruch 13, **gekennzeichnet durch** ein mit der Kraftabgriffseinheit (16b₁, 26b₁, 48b, 26b₂, 16b₂) bewegungsgekoppeltes, in einer Führungsausnehmung (53b) des Stators (2) verschiebbar geführtes und insbesondere rohrförmig ausgebildetes Führungsteil (52b).

15. Linearantriebsvorrichtung nach einem der Ansprüche 1 bis 14, **dadurch gekennzeichnet, dass** die ersten und zweiten Stellkräfte je nach Ausstattung und Ansteuerungsart alternativ oder gleichzeitig, sowie gleichgerichtet oder gegensinnig aufgebracht werden können.

16. Linearantriebsvorrichtung nach einem der Ansprüche 1 bis 15, **dadurch gekennzeichnet, dass** der Stator (2) in seinem Inneren einen Längserstreckung aufweisenden Aufnahmeraum (12a, 12b₂) definiert, in dem sich ein zum Läufer (4) gehörendes Abtriebsteil (16a, 16b₂) befindet, das den Aufnahmeraum (12a, 12b₂) unter Abdichtung in zwei axial aufeinanderfolgende erste und zweite Teilräume (17a, 18a; 17b₂, 18b₂) unterteilt, die jeweils zur gesteuerten Fluidbeaufschlagung ausgebildet sind, wobei die Zu- und Abfuhr des fluidischen Druckmediums durch eine Ventileinrichtung gesteuert wird, die durch eine elektronische Steuereinrichtung angesteuert wird, wobei die elektronische Steuereinrichtung in geregelter Betriebsweise sowohl die Erzeugung der fluidischen als auch der elektrodynamischen Stellkraft steuert.
